Europäisches Patentamt

European Patent Office

Office européen des brevets

(11) Publication number: 0 336 821 A2

# EUROPEAN PATENT APPLICATION

(21) Application number: 89400882.0

(22) Date of filing: 30.03.89

(51) Int. Cl.4: G 06 F 12/08

(30) Priority: 04.04.88 US 176980

(43) Date of publication of application:
11.10.89 Bulletin 89/41

(84) Designated Contracting States:
BE DE ES FR GB IT NL SE

(71) Applicant: EVANS & SUTHERLAND COMPUTER
CORPORATION
580 Arapeen Drive
Salt Lake City Utah 84108 (US)

(72) Inventor: Dulong, Carole
1420 Highland View Court
Los Altos California 94022 (US)

Scaglia, Patrick
18983 Harleigh Drive
Saratoga California 95070 (US)

Leclerc, Jean-Yves
1420 Highland View Court
Los Altos California 94022 (US)

(74) Representative: Bourgognon, Jean-Marie
Cabinet Flechner 22, Avenue de Friedland
F-75008 Paris (FR)

(54) Cache memory system for computer use.

(57) Associated for use with central processors (e.g. several
function units) and a main memory, a cache memory system
holds information units available to the processor more quickly
than from the main memory. The cache is accessed directly with
virtual addresses and includes an additional field for a key
designation for distinctly identifying the pertinent program
involving associated units of information. The difficulty of virtual
addresses is that two virtual addresses in two different contexts
may be the same but do not correspond to the same physical
location. Thus, the additional field in the cache indicates
whether the virtual address found is the one looked for.
Structure is provided for purging the cache in a timely fashion to
accommodate newly assigned keys.

FIG. 1

FIG. 2

FIG. 3

**Description**

## CACHE MEMORY SYSTEM FOR COMPUTER USE

### Background and Summary of the Invention

For several years, cache memories have been used in computers to hold select information that is accessible to the processor more readily than it is available from the main memory. The structures of cache memory are described in a book entitled, "High-Performance Computer Architecture" by Harold S. Stone, published by Addison-Wesley Publishing company, 1987, beginning on page 29.

Typically, a cache memory is located near the processing unit to store units of information that are available more quickly than they could be obtained from the primary or main memory. In some instances, the required time to access a cache memory may be an order of magnitude less than the time taken to access the main memory.

Generally, caches operate on the assumption that, in the near future, a central processor is likely to need information units that are currently in process. Accordingly, a traditional cache system attempts to provide such information units readily available. Of course, it is to be recognized that at any given time, a desired information unit may or may not be available from the cache memory and resort to the main memory may be necessary. Information units unavailable from cache simply are fetched from the main memory with the attendant penalty of an increased access time. Thus, optimum use is made of a high speed memory with a main memory serving as a backup. Accordingly, active items tend to move from the main memory to the cache memory while inactive items tend to migrate back to the main memory.

In a traditional cache memory system, when a central processing unit needs information it sends the virtual address of the desired information to the cache memory and to a translation buffer. Conventionally, both real and virtual addresses consist of a page number and a displacement position within the page. The page number requires an address translation from virtual to real; however, the displacement number typically is the same for both the virtual and real addresses. In accordance with conventional operation of cache memory systems, after converting a page number to a real address, the cache is accessed to identify several information units from which one is selected on the basis of the displacement address.

While most caches require translation of virtual addresses into real addresses before locating information in the cache, it has been considered to access the cache directly with a virtual address. Generally, that consideration has not been widely implemented. Note that virtual address structures are treated in detail in the above-referenced book, "High-Performance Computer Architecture", in a section beginning on page 70.

Further with respect to cache memory, in addition to fetching information units from the cache memory, the central processing unit also stores information units in cache. Traditionally, for such events, a virtual address is generated along with a control signal to command the storage of specific information. Normally, to assure the availability of such information, it is also placed in the main memory. Prior techniques of cache systems include structures for immediately transmitting data units to the main memory (write-through) and alternatively sending the information from the cache to the main memory when a line containing the information is replaced (copy-back).

While cache memory systems have long been common in mainframes and minicomputers, more recently they have been used in microcomputers. Generally, with effective design, various forms of prior units have been quite effective. However, the present invention is based on recognizing the need for an alternative structure to accommodate relatively large-scale computer architecture as systems utilizing a plurality of processors or function units operating many programs. In that regard, it will be appreciated that each processor may run in a different virtual domain.

Thus, two virtual addresses may be the same in two different processors but correspond to a different physical address. A program may be swapped out of a processor and run in another processor where it accesses another cache. However, it must not use data brought by a program of a different virtual domain. Accordingly, a problem is identified.

Generally, the present invention involves a cache memory system with an additional field in the cache to register program-associated keys and thereby accommodate retention of information units in the cache memory throughout the processing of several distinct programs. In the disclosed embodiment, the cache memory is directly accessed by virtual addresses. Final selection of information units involves resort to a specific key. The key format also is employed to manifest valid data. That is, to flush the cache memory (as when all keys are assigned) all keys in the cache memory are set to a predetermined key value indicating invalid data. Thus, the problem of duplicate virtual addresses is avoided.

In the drawings, which constitute a part of this specification, an exemplary embodiment of the invention is set forth as follows:

FIGURE 1 is a block diagram of a cache memory system incorporating the principles of the present invention;

FIGURE 2 is a graphic representation of an address format as utilized in the system of FIGURE 1; and

FIGURE 3 is a graphic representation of a storage format as used in the system of FIGURE 1.

A detailed illustrative embodiment of the present invention is disclosed herein. However, structure to specifically relate the contents of cache memory to various programs in accordance with the present invention may be embodied in a wide variety of forms, some of which may be quite different from those of the disclosed embodiment. Consequently, the specific structural and functional details disclosed herein are merely representative, yet in that regard they are deemed to afford the best embodiment for purposes of disclosure and to afford a basis for the claims herein which define the scope of the present invention.

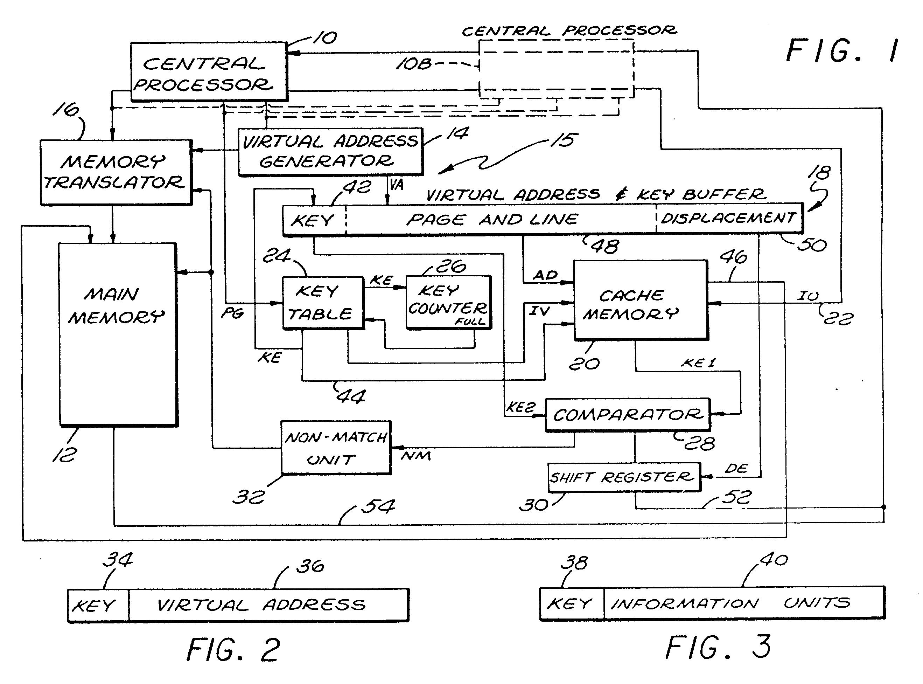

Referring initially to FIGURE 1, a central processor 10 (top central) and a main memory 12 (lower left) comprise classic units of a traditional computer and provide the environment for the cache memory system of the disclosed embodiment. Systems incorporating the present invention normally will include several processors or function units as well as a multitude of different memory configurations. Accordingly, although the interrelationship and operation of the disclosed system is treated with regard to the processor 10, it is to be understood that additional processors 10B (dashed line) and so on are incorporated in the system to function with the cache in a manner similar to that described below for the processor 10. It is noteworthy that a traditional cache memory system was somewhat similarly illustrated in relation to a central processor and a main memory in a recent article ("Cache Memory Design: An Evolving Art", IEEE Spectrum, December 1987, page 40).

In the operation of the system of FIGURE 1, the central processor 10 (along with the other processors 10B and so on) manipulates and processes data in the form of information units. Note that the central processor 10 may incorporate a plurality of individual function units dealing with a number of independant programs. In accordance with the present invention, it is stressed that the cache memory system 15 (indicated generally) accommodates information units relating to a plurality of different programs. In that regard, distinct program keys are assigned to identify, control and access the different information units.

The central processor 10 functions in cooperation with a control system (not separately shown) to time and facilitate the movement of signals within and between various units as represented in FIGURE 1. However, as somewhat conventional, in the interests of rendering the system understandable, details of timing and control are not illustrated. Rather, basic data paths are shown and described below in accordance with structure and techniques that are well known in the computer art.

The central processor 10 is coupled to a virtual address generator 14 (upper central) that is in turn connected to a memory translator 16 (left), also connected to the central processor 10. On command, the virtual address generator 14 provides virtual address signals representative of a memory page number and displacement (e.g. line, word and displacement). The address signals are applied to the memory translator 16 which functions in cooperation with the main memory 12. Note that the cache memory system 15 operates directly with virtual addresses. Also note that the generator 14 and the translator 16 constitute established structures of the prior art as described in the above-referenced Spectrum article.

The virtual address generator 14 provides virtual address signals VA to a virtual-address and key buffer 18. From the buffer 18, address signals AD are applied to a cache memory 20 that may take various forms as well known in the prior art and as described in the above-referenced Spectrum article.

The cache memory 20 receives data (information words) in the form of information units signals IU through a line 22 (right) from the central processor 10. Generally, the cache memory 20 is addressed by a virtual address and a key (see FIGURE 2) and stores data as lines of information units with an identifying program-related key (see FIGURE 3).

As illustrated in FIGURE 1, identifcation keys are provided in the form of key signals KE from a key table 24 to: the buffer 18, a key counter 26 and the cache memory 20. The key table 24 may take the form of a small, fast associative memory relating specific keys to specific programs.

To command a key signal KE, a program command signal PG is provided from the central processor 10 to the key table 24. To command the formation of a fresh key, the program signal PG carries a flag that also actuates the key counter 26. Note that in accordance herewith, the use of a key avoids excessive flushings. In a multiprocessor, a program can run in any processor. When a program is swapped out of a processor, the existence of the key prevents having to systematically flush the cache. Giving a new key to a new program helps by preserving the cache as it exists. When a program returns to a function unit, after having run, it can retrieve some of its data from the cache. It does not restart from scratch.

Generally, the key counter 26 tallies assigned keys to a predetermined number, the attainment of which flushes the cache. That is, when the key counter 26 is filled, a "full" signal FU is provided to the key table 24 thereby flushing the cache memory 20. To flush the cache memory 20, the key table 24 supplies an invalid signal IV to disqualify each information unit in the memory 20.

Information units are fetched from the cache memory 20 by supplying an addressed set of lines to a comparator 28. That is, each addressed line is accompanied by a key KE1 as indicated in the path from the memory 20 to the comparator 28. A key KE2 from the buffer 18 (designating the specific desired line of data units) also is supplied to the comparator 28. As described in detail below, in the event of a "hit" between the keys KE1 and KE2 (the desired information unit is available from the cache memory 20) the comparator 28 supplies the data line containing the desired information unit to a shift register 30 from which the desired information unit is selected from a line by a displacement signal DI supplied from the buffer 18. Forms of the comparator 28 and the shift register 30 are well known in the prior art as indicated in the above-referenced Spectrum magazine article.

In the event of a "miss" (absence of the desired data unit in the cache memory 20) the comparator 28 provides a signal NM to a no-match unit 32 that may take the form of a simple control unit for actuating the memory translator 16 and the main memory 12 to provide the desired information unit to the central processor 10. Such structures are well known in cache systems of the prior art.

As indicated above, in the system of FIGURE 1, data is formatted basically in two separate forms for addressing and storing data units (FIGURES 2 and 3). An address format is composed in the buffer 18 and is illustrated in FIGURE 2. A key field 34 carries the key signals KE and implements aspects of the present invention. The key field 34 comprises eight bits in an embodiment of the present invention and accommodates a count of two hundred fifty-six keys.

A virtual address field 36 indicates the page, line and displacement of the specified data unit as shown in the buffer 18, FIGURE 1. Of course, fields of various size may be employed in various formats. As an example, the virtual address field 36 may take a form as shown and described in the above-referenced Spectrum article.

The format for data storage in the cache memory 20 (FIGURE 1) is illustrated in FIGURE 3. Specifically, a key field 38 is added to an information line field 40. Accordingly, multiple similarly addressed information fields 40 (as associated with various programs) are distinguished and manipulated by the use of the key field 38.

For convenience, pursuing further explanation of the disclosed embodiment, a summary of the signals identified and described in the operation is set forth below:

| Signal | Representation |
| --- | --- |
| AD | access address |
| DI | displacement |
| FU | full key counter |
| IU | information unit |
| IV | invalid |
| KE | key |
| KE1 | key from cache |
| KE2 | key from buffer |
| NM | not present |
| PG | program |
| VA | virtual address |

In view of the above explanation, the system of the present invention may now be fully appreciated by assuming certain processing objectives and considering the operating sequence to accomplish such objectives. Accordingly, initially assume that the central processor 10 initiates a program P0 that develops an information unit represented by a signal IU and is to be stored in the cache memory 20. As a consequence, the virtual address generator 14 is actuated to produce a signal VA which is stored in fields 48 and 50 of the buffer 18. Concurrently with the above operations, the key table 24 is actuated by the program signal PG commanding the creation of a fresh key for association with the program P23. In that regard, assume a key of eight bits and a tally in the key counter 26 of "183". Accordingly, the key counter 26 is stepped to a tally of "184" and the key table 24 registers an association of the program P23 with a key "184". The key "184" is manifest by the signal KE which is supplied from the table 24 to a field 42 in the buffer 18.

As a result of the above actions of the key table 24 and the virtual address generator 14, the buffer 18 contains a specific key ("184") and a virtual address (page, line and displacement) as illustrated in FIGURE 2. Address signals AD manifest the storage address in the cache memory 20 commanding the registration of the key and the information unit in the addressed location. Specifically, the information unit is supplied as a signal IU through the line 22 while the key signal KE is supplied through the line 44. Consequently, the cache memory 20 contains the data in the format as illustrated in FIGURE 3; key in field 38, information unit in one displacement of the field 40.

As explained above, the main memory 12 must be maintained with respect to information in the cache 20. Accordingly, the cache memory 20 supplies the main memory 12 through a line 46. The structure for performing such operation is well known in the prior art and has been designated as utilizing the "write-through" technique for maintaining the main memory in association with a cache memory.

As indicated above, over an operating interval, central processor 10 may embrace several different programs, e.g. programs as designated P1, P2, P3 and so on. On each occasion when a data unit from a fresh program is placed in the cache memory 20, a fresh key is created for concurrent storage. Conventionally, it would be the practice to flush the cache as duplications may exist. However, in accordance herewith a distinct key exists for each program. Note that a new key is assigned only to a new program not systematically, otherwise it has no interest. The purpose is to keep data in the cache when a program comes back. Thus, additional data units of a program bear the same key in relation to the cache. The operation of the system at a time when all keys have been assigned is explained in detail below.

To pursue another operation of the system of FIGURE 1, next assume the central processor needs an information unit that is to be fetched from the cache memory 20. On such an occasion, the key signal KE and the address are again set into the buffer 18. Specifically, a program signal PG is supplied from the central processor 10, identifying the program, e.g. program P0, to the key table 24. As a result, the key table 24 transfers the select key to the field 42 of the buffer 18.

Concurrent with the above operations, the central processor 10 actuates the virtual address generator 14 to provide the virtual address of the desired information unit in the field sections 48 and 50 of the buffer 18. Note that the field section 48 contains the page and line address while the section 50 contains the displacement address. Also note that the cache memory 20 is directly addressed by the virtual address. As indicated above, such technique is known, however, not widely used.

After the above operations, the system is posed to fetch the desired information unit from the cache memory 20. The page-and-line address signal AD commands the cache memory 20 to provide a set of lines, one of which will normally contain the information unit of interest. Preliminarily, it is noteworthy that structures for the performance of the operation, termed "set associative", are well known in the prior art. Of course, alternative techniques may be employed.

As the responsive set of data lines are provided in sequence from the cache memory 20, the key of each is tested against the key of the addressed information unit. Specifically, key signals KE1 from the cache memory 20 are tested against key signals KE2 from the key table 24. That is, the signal KE2 is supplied from the buffer 18 to the comparator 28 for comparison in sequence with each of the keys KE1 of a set of lines from the memory 20. In the event of a hit, the comparator 28 passes the select line of the set to the shift register 30. Normally a hit terminates further testing.

Fetching the specified data unit from the select line simply involves driving the shift register 30 by the displacement address as stored in the field section 50 of the buffer 18. The structure for such an operation is known in the prior art and is described in the referenced Spectrum article. The desired data unit, so identified, is supplied through a line 52 to the central processor 10 to complete the fetching operation.

If the comparator 28 does not detect a hit as a result of testing the set of data lines, the resulting miss prompts the comparator 28 to produce the signal NM which actuates the no-match unit 32. On actuation, the unit 32 drives the memory translator 16 and the main memory 12 to produce the desired information unit by traditional fetching apparatus. Accordingly, the requested information unit is fetched for the central processor 10 through a line 54.

Operations similar to those described accommodate storing and fetching data units associated with any of a multitude of programs in association with the cache memory 20. Also, as new programs develop, new keys are assigned and order is accordingly preserved. Also, the key mechanism allows the cache to be shared by several programs running one after the other in the same processor and using different virtual address space. However, as indicated above, a limited number of keys is available and the system must accommodate a situation in which all keys have been assigned.

As indicated above, assuming a key of eight bits, the key counter 26 has a binary count capacity of "256". When full capacity is attained, a full signal FU is supplied from the counter 26 to the key table 24 indicating that no additional keys are available. In such an event, to accommodate the assignment of new keys, the cache 20 is flushed, i.e. completely cleared. Flushing could be accomplished by clearing the validity bits of each data line in the cache 20 to zero. However, as an economy in memory, the disclosed system avoids the use of a validity bit in the cache. Rather, the disclosed embodiment utilizes a specific key value to designate invalid information. Specifically, a key value of "256" indicates an invalid line information, i.e. a clear storage space.

In accordance with the above operation, when the key counter 26 attains capacity, the signal FU actuates the key table 24 to provide the key "256" in each line of the cache memory 20. The command is implemented by the signal IV with the result that the cache is totally cleared preparatory to regeneration based on the registration of fresh information units.

As an alternative to completely flushing the cache memory 20 when it reaches capacity, other techniques may be utilized. One arrangement is to flush a fraction of the cache memory 20 (e.g. one fourth) each time a new key is assigned. Of course, fractional sizes and frequency of flushing may be variously implemented to accommodate design parameters of specific systems.

From the above it may be seen that systems and apparatus embodying the present invention can be effectively implemented and employed to serve data processors or function units with shared cache. That is, the keys enable sharing without the traditional operation of flushing each time a new program comes into operation. It will also be apparent that systems and apparatus incorporating the principles of the present invention may be variously implemented in a wide variety of different specific forms. Accordingly, the scope hereof is deemed to be as set forth in the claims below.

## Claims

1. A cache memory system for use with a programable central processor for processing information units, and a main memory, said cache memory system comprising:
virtual address means operative with said central processor to provide virtual address signals for information units and program key signals identifying information units of a program operable in said central processor;
an addressable cache memory for storing said information units along with provided program key signals; and
means for fetching information units from said addressable cache memory specified by a virtual address and program key signals.

2. A cache memory system according to claim 1 wherein said cache memory is directly addressable by said virtual address signals.

3. A cache memory system according to claim 1 wherein said virtual address means includes means for providing program key signals in a numerical sequence to a predetermined limit.

4. A cache memory system according to claim 3 further including means to flush the contents of said cache memory under certain circumstances as upon said numerical sequence attaining said predetermined limit.

5. A cache memory system according to claim 4 wherein said means to flush comprises means to store a predetermined value of said program key signals in each addressable storage space of said cache memory to indicate said spaces are clear.

6. A cache memory system according to claim 5 wherein said cache memory is directly addressable by said virtual address signals.

7. A cache memory system according to claim 6 wherein said means for fetching includes means for testing specified program key signals against a set of program key signals stored with information units in said addressable cache memory.

8. A process for storing information units being processed in accordance with programs in a central processing unit operating in cooperation with a main memory, said process including the steps of:
providing select information units from said central processing unit for fast access storage;
assigning a virtual address and a program key to said select information units;
providing a fast-access addressable cache memory and storing said select information units in said cache memory addressable by said virtual address and said program key for fetching said select information units on demand to said central processing unit; and
flushing at least part of said cache memory on predetermined conditions whereby to accommodate storing said select information units.

9. A process according to claim 8 wherein said cache memory is directly addressable by said virtual address.

10. A process according to claim 9 wherein said step of flushing is performed when the assigned program keys attain a predetermined value.

FIG. 1

FIG. 2

FIG. 3

CENTRAL PROCESSOR

CENTRAL PROCESSOR

VIRTUAL ADDRESS GENERATOR

MEMORY TRANSLATOR

MAIN MEMORY

VIRTUAL ADDRESS & KEY BUFFER

PAGE AND LINE | DISPLACEMENT

KEY

CACHE MEMORY

KEY TABLE

KEY COUNTER | FULL

COMPARATOR

SHIFT REGISTER

NON-MATCH UNIT

| KEY | VIRTUAL ADDRESS |

| KEY | INFORMATION UNITS |